# EUROPÄISCHE PATENTSCHRIFT

(11) **EP 3 556 626 B1**
(45) Veröffentlichungstag und Bekanntmachung des Hinweises auf die Patenterteilung: **15.10.2025**
(21) Anmeldenummer: 19158472.1
(22) Anmeldetag: 21.02.2019
(51) Int. Cl.: B60W 20/13, B60W 10/02, B60W 10/08, B60W 20/14, B60W 30/18, B60K 6/387, B60K 6/48, B60W 20/40

(54) **VERFAHREN ZUM BETRIEB EINES KRAFTFAHRZEUGS**
METHOD FOR OPERATING A MOTOR VEHICLE
PROCÉDÉ DESTINÉ AU FONCTIONNEMENT D'UN VÉHICULE AUTOMOBILE

(30) Priorität: 20.04.2018 DE 102018206050
(43) Veröffentlichungstag der Anmeldung: 23.10.2019
(73) Patentinhaber: AUDI AG, 85045 Ingolstadt (DE)
(72) Erfinder: Hölzl, Andreas, 85402 Kranzberg (DE); Feldmann, Uwe, 85128 Nassenfels (DE)

(56) Entgegenhaltungen:
- EP-A1- 1 431 623
- DE-A1- 102009 000 222
- DE-A1- 102016 209 530
- FR-A1- 3 017 849
- US-A1- 2017 008 529

## Beschreibung

Die Erfindung betrifft ein Verfahren zum Betrieb eines Kraftfahrzeugs. Ferner betrifft die Erfindung ein Kraftfahrzeug.

Der Antrieb von Kraftfahrzeugen erfolgt zunehmend durch Elektromotoren. Bei sogenannten Hybridfahrzeugen ist zudem ein Verbrennungsmotor vorgesehen, wobei das Kraftfahrzeug sowohl durch den Elektromotor als auch durch den Verbrennungsmotor angetrieben werden kann. Dies ist zweckmäßig, da die Reichweite von Elektrofahrzeugen aufgrund einer begrenzten Kapazität der Energiespeicher im Vergleich zu mit Verbrennungsmotoren ausgestatteten Kraftfahrzeugen eher gering ist.

Um die Reichweite von Elektrofahrzeugen zu erhöhen hat es sich als zweckmäßig erwiesen, die bei einem Bremsvorgang frei werdende kinetische Energie zurückzugewinnen beziehungsweise zu rekuperieren. In der Druckschrift DE 11 2012 000 892 T5 ist eine Bremsvorrichtung für ein Kraftfahrzeug offenbart, dessen Elektromotor als Generator betreibbar ist. Dieser wandelt die kinetische Energie des Kraftfahrzeugs während des Bremsvorgangs in elektrische Energie um, mit der ein elektrischer Energiespeicher des Kraftfahrzeugs aufgeladen wird.

Die Druckschrift EP 1 431 623 A1 offenbart ein Verfahren zum Steuern eines Hybridfahrzeugs, umfassend das Rückgewinnen verbleibender kinetischer Energie von einer elektrischen Maschine, wenn eine Kupplung zum Trennen der elektrischen Maschine von dem Antriebsstrang geöffnet wird.

Das der vorliegenden Erfindung zugrundeliegende Problem liegt darin, ein demgegenüber verbessertes Verfahren zum Betrieb eines Kraftfahrzeugs anzugeben, insbesondere im Hinblick auf die Betriebsdauer des elektrischen Energiespeichers und den Wirkungsgrad des Kraftfahrzeugs.

Die Aufgabe wird erfindungsgemäß durch ein Verfahren zum Betrieb eines Kraftfahrzeugs gelöst, wobei das Kraftfahrzeug eine elektrische Maschine und eine Kopplungseinrichtung umfasst, die in einem ersten Kopplungszustand die elektrische Maschine mit einem Antriebsstrang koppelt und in einem zweiten Kopplungszustand die elektrische Maschine von dem Antriebsstrang entkoppelt, wobei das Verfahren die folgenden Schritte umfasst:
a) Erfassen einer Kopplungsinformation, die angibt, ob die Kopplungseinrichtung in dem ersten oder zweiten Kopplungszustand ist,
b) Auswerten einer Rekuperationsbedingung, deren Erfüllung von der Kopplungsinformation abhängt, wobei die Rekuperationsbedingung erfüllt oder nur dann erfüllbar ist, wenn die Kopplungseinrichtung in dem zweiten Kopplungszustand ist, und
c) Abbremsen der elektrischen Maschine durch Betreiben der elektrischen Maschine als Generator, wenn die Rekuperationsbedingung erfüllt ist.

Durch das Verfahren kann vorteilhaft erreicht werden, dass im Falle einer Abkopplung der elektrischen Maschine vom Antriebsstrang eine gegebenenfalls in einem Rotor der elektrischen Maschine gespeicherte Rotationsenergie nicht aufgrund von Dissipation beziehungsweise Reibung in der elektrischen Maschine verloren geht, sondern rückgewonnen wird. Die im Rotor gespeicherte mechanische Energie wird durch die elektrische Maschine, die in diesem Verfahrensschritt als Generator betrieben wird, in elektrische Energie umgewandelt und mithin für verschiedene Zwecke nutzbar. Dadurch kann der Wirkungsgrad des Kraftfahrzeugs verbessert werden.

Wird die Kopplungseinrichtung im ersten Kopplungszustand betrieben, das heißt, ist die elektrische Maschine mit dem Antriebsstrang gekoppelt, dann kann die elektrische Maschine als Elektromotor für den Antrieb des Kraftfahrzeugs genutzt werden. Die dazu erforderliche elektrische Energie kann dabei von einem elektrischen Energiespeicher bereitgestellt werden. Ein Moment der elektrischen Maschine kann dabei durch die Bauteile eines Antriebsstrangs auf die Räder des Kraftfahrzeugs übertragen werden. Insbesondere kann der Antriebstrang eine Antriebswelle, die als Kardanwelle ausgebildet sein kann, sowie die Kopplungseinrichtung umfassen. Zudem kann der Antriebsstrang ein mit der Antriebswelle gekoppeltes Differential umfassen, wobei zwei mit dem Differential gekoppelte Abtriebswellen mit jeweils einem Rad des Kraftfahrzeugs verbunden sind.

Wird die Kopplungseinrichtung hingegen im zweiten Kopplungszustand betrieben, dann ist die elektrische Maschine von dem Antriebsstrang entkoppelt und die elektrische Maschine kann mithin nicht mehr zum Antrieb des Kraftfahrzeugs genutzt werden. In diesem Fall kann sich der Rotor der elektrischen Maschine jedoch noch in Rotation befinden, insbesondere wenn die elektrische Maschine unmittelbar zuvor zum Antrieb des Kraftfahrzeugs genutzt wurde. In diesem Fall kann die Rekuperationsbedingung erfüllt sein, wobei die elektrische Maschine dann als Generator genutzt werden kann. Es kann jedoch auch sein, dass die Erfüllung der Rekuperationsbedingung von weiteren Bedingungen abhängt. Sie kann beispielsweise nur dann erfüllbar sein, wenn die elektrische Maschine eine gewisse Mindestdrehzahl aufweist, da ansonsten eine Rekuperation unter Umständen nicht effizient sein kann. Ergänzend oder alternativ kann die Erfüllung der Rekuperationsbedingung von einer prädizierten Zeit abhängen, wie lange die Kopplungseinrichtung voraussichtlich im zweiten Kopplungszustand sein wird. Wird die elektrische Maschine nur kurz abgekoppelt, kann es vorteilhaft sein, die Rotation zu erhalten.

In dem erfindungsgemäßen Verfahren kann vorgesehen sein, dass eine Steuerungseinrichtung für das Kraftfahrzeug vorgesehen ist, wobei die Steuerungseinrichtung die Kopplungseinrichtung durch Ansteuerung eines insbesondere elektromechanischen Aktors von dem ersten in den zweiten Kopplungszustand bringen kann und umgekehrt. Die Steuerungseinrichtung kann ferner dazu eingerichtet sein, den so eingestellten Kopplungszustand zu speichern und/oder sensorisch zu erfassen. Die Auswertung der Rekuperationsbedingung kann durch die Steuerungseinrichtung erfolgen. Dabei kann es zweckmäßig sein, wenn diese durch die Steuerungseinrichtung gespeicherte oder erfasste Information über den Kopplungszustand der Kopplungseinrichtung im Rahmen der Auswertung der Rekuperationsbedingung ausgewertet wird.

Es ist denkbar, dass die elektrische Maschine auch im ersten Kopplungszustand als Generator betrieben werden kann, wenn eine weitere Rekuperationsbedingung erfüllt ist. Die weitere Rekuperationsbedingung kann erfüllt sein, wenn das Fahrzeug abgebremst wird beziehungsweise wenn ein Bremspedal des Kraftfahrzeugs betätigt wird. Dadurch wird es ermöglicht, dass die kinetische Energie des Kraftfahrzeugs durch die als Generator betriebene elektrische Maschine in elektrische Energie umgewandelt und dem elektrischen Energiespeicher zugeführt werden kann. Die Auswertung der weiteren Rekuperationsbedingung kann ebenfalls durch die Steuerungseinrichtung erfolgen.

In dem erfindungsgemäßen Verfahren ist vorgesehen, dass wenigstens eine den Betriebszustand des Kraftfahrzeugs betreffende Betriebsinformation erfasst wird, wobei die Erfüllung der Rekuperationsbedingung zusätzlich von der Betriebsinformation abhängt. Eine Betriebsinformation kann die Drehzahl der elektrischen Maschine betreffen, wobei die Rekuperationsbedingung nur dann erfüllbar ist, wenn die Drehzahl größer als ein vorgegebener Drehzahlgrenzwert ist. Beispielsweise kann der Drehzahlgrenzwert eine Umdrehung pro Minute betragen. Ist die Drehzahl der elektrischen Maschine kleiner als der Grenzwert, dann ist die Rekuperation nicht sinnvoll, da die in der elektrischen Maschine gespeicherte Rotationsenergie zu klein ist, als dass ein Energiegewinn durch die Rückgewinnung möglich wäre. Die Erfassung der Drehzahl kann durch einen Sensor an der elektrischen Maschine erfolgen.

Eine Betriebsinformation betrifft die Geschwindigkeit des Kraftfahrzeugs. So kann es beispielsweise sinnvoll sein, dass die Rekuperationsbedingung nicht erfüllt wird, wenn das Fahrzeug stillsteht. Steht das Kraftfahrzeugs beispielsweise an einer roten Ampel und steht mithin ein Anfahren unmittelbar bevor, so kann die in der elektrischen Maschine gespeicherte Rotationsenergie beispielsweise für den Anfahrvorgang des Kraftfahrzeugs genutzt werden, weshalb die elektrische Maschine nicht abgebremst werden sollte.

Eine weitere Betriebsinformation kann den Ladezustand des Energiespeichers betreffen. Befindet sich der Energiespeicher in einem vollgeladenen Zustand, so wäre eine Rekuperation der in der elektrischen Maschine gespeicherten Energie nicht sinnvoll. Stattdessen kann das Abbremsen des Rotors der elektrischen Maschine durch Reibung in der elektrischen Maschine beziehungsweise im Antriebsstrang erfolgen.

Eine weitere Betriebsinformation betrifft ein prognostiziertes Starten des Verbrennungsmotors. Steht ein derartiger Start unmittelbar bevor, so kann die in der elektrischen Maschine gespeicherte Energie statt zur Rekuperation zum Starten des Verbrennungsmotors genutzt werden. Alternativ dazu kann die rekuperierte Energie selbstverständlich für weitere elektronische Systeme der Kraftfahrzeugs genutzt werden.

In dem erfindungsgemäßen Verfahren kann vorgesehen sein, dass wenigstens eine den Betriebszustand des Kraftfahrzeugs betreffende Fahrzeuginformation erfasst wird, wobei bei Erfüllung einer von der Fahrzeuginformation abhängigen Kopplungsbedingung die Kopplungseinrichtung in den zweiten Kopplungszustand wechselt, wenn die Kopplungseinrichtung im ersten Kopplungszustand ist. Ist die Kopplungsbedingung erfüllt, dann wechselt die Kopplungseinrichtung in den zweiten Kopplungszustand, das heißt, die elektrische Maschine wird vom Antriebsstrang entkoppelt. Beispielsweise kann die Fahrzeuginformation die Betätigung der Bremsen betreffen, wobei zum Beispiel bei der Durchführung einer Vollbremsung die Kopplungseinrichtung vom ersten in den zweiten Kopplungszustand wechselt, das heißt, die elektrische Maschine vom Antriebsstrang entkoppelt wird.

Die Fahrzeuginformation kann mit der Betriebsinformation identisch sein oder diese umfassen. In diesem Fall kann dieselbe Information dazu führen, dass die Kopplungseinrichtung in den zweiten Kopplungszustand wechselt und die elektrische Maschine daraufhin, nach erfolgtem Wechsel des Kopplungszustands, als Generator zur Rekuperation betrieben wird. Dies kann beispielsweise dann sinnvoll sein, wenn das Kraftfahrzeug als Hybridfahrzeug ausgeführt ist und der Antrieb durch den Verbrennungsmotor erfolgt oder wenn das Fahrzeug im ausgekoppeltem Zustand "segelt".

Bei dem erfindungsgemäßen Verfahren kann vorgesehen sein, dass das Kraftfahrzeug durch die elektrische Maschine angetrieben wird, wenn sich die Kopplungseinrichtung im ersten Kopplungszustand befindet und eine Antriebsbedingung erfüllt ist. Die Antriebsbedingung kann beispielsweise dann erfüllt sein, wenn ein Fahrer des Kraftfahrzeugs das Gaspedal betätigt. Die Auswertung der Antriebsbedingung kann ebenfalls durch die Steuerungseinrichtung erfolgen.

In dem erfindungsgemäßen Verfahren kann die von der elektrischen Maschine bei Erfüllung der Rekuperationsbedingung rekuperierte Energie zum Aufladen des oder eines weiteren elektrischen Energiespeichers genutzt werden. Dadurch kann die Betriebsdauer des elektrischen Enerigespeichers verlängert werden, da die so gespeicherte Energie erneut zum Antrieb des Kraftfahrzeugs oder zum Betrieb weiterer elektrischer Komponenten genutzt werden kann.

In dem ersten Kopplungszustand kann die elektrische Maschine über ein Getriebe mit einer Komponente des Antriebsstrangs gekoppelt sein, wobei das Getriebe die Drehzahl der elektrischen Maschine auf die Drehzahl dieser Komponente des Antriebsstrangs übersetzt. Die Drehzahl der elektrischen Maschine kann größer als die Drehzahl dieser Komponente des Antriebsstrangs sein, das heißt, dass das Übersetzungsverhältnis des Getriebes bei einem Antrieb der Komponente durch die elektrische Maschine größer als 1 ist. Dies ermöglicht es eine relativ kleinbauende und schnell drehende elektrische Maschine zum Antrieb zu nutzen, deren Drehmoment mit Hilfe des Getriebes erhöht wird. Das Getriebe kann beispielsweise als ein Planetengetriebe ausgebildet sein, das über eine mit der elektrischen Maschine verbundenen Welle an die Antriebswelle bzw. den Antriebsstrang gekoppelt ist.

Die Erfindung betrifft zudem ein Kraftfahrzeug umfassend eine elektrische Maschine, eine Kopplungseinrichtung, die in einem ersten Kopplungszustand die elektrische Maschine mit einem Antriebsstrang koppelt und in einem zweiten Kopplungszustand die elektrische Maschine von dem Antriebsstrang entkoppelt, und eine Steuerungseinrichtung, wobei die Steuerungseinrichtung dazu eingerichtet ist, den Betrieb der elektrischen Maschine gemäß dem Verfahren nach einem der vorangehenden Ansprüche zu steuern.

Die Steuerungseinrichtung kann, wie bereits erwähnt, dazu eingerichtet sein, die Kopplungseinrichtung über einen insbesondere elektromechanischen Aktor zu steuern beziehungsweise vom ersten Kopplungszustand in den zweiten Kopplungszustand zu schalten und umgekehrt. Zweckmäßigerweise kann die Steuerungseinrichtung dazu eingerichtet sein, den aktuellen Kopplungszustand zu erfassen und/oder zu speichern. Ferner kann die Steuerungseinrichtung dazu eingerichtet sein, einen Ladezustand des elektrischen Energiespeichers zu erfassen und gegebenenfalls auszuwerten.

Eine Weiterbildung des erfindungsgemäßen Kraftfahrzeugs kann darin bestehen, dass ein Getriebe die elektrische Maschine in dem ersten Kopplungszustand mit einer Komponente des Antriebsstrangs koppelt, wobei das Getriebe die Drehzahl der elektrischen Maschine auf die Drehzahl dieser Komponente des Antriebsstrangs übersetzt, wobei die Drehzahl der elektrischen Maschine größer ist als die Drehzahl der Komponente des Antriebsstrangs.

Die für das erfindungsgemäße Verfahren beschriebenen Merkmale sind entsprechend mit den genannten Vorteilen auf das erfindungsgemäße Kraftfahrzeug übertragbar.

Weitere Vorteile und Einzelheiten der Erfindung ergeben sich aus den im Folgenden beschriebenen Ausführungsbeispielen sowie anhand der Zeichnungen. Dabei zeigen schematisch:
- Fig. 1: ein Ausführungsbeispiel eines erfindungsgemäßen Kraftfahrzeugs, und
- Fig. 2: ein Flussdiagramm eines Ausführungsbeispiels des erfindungsgemäßen Verfahrens.

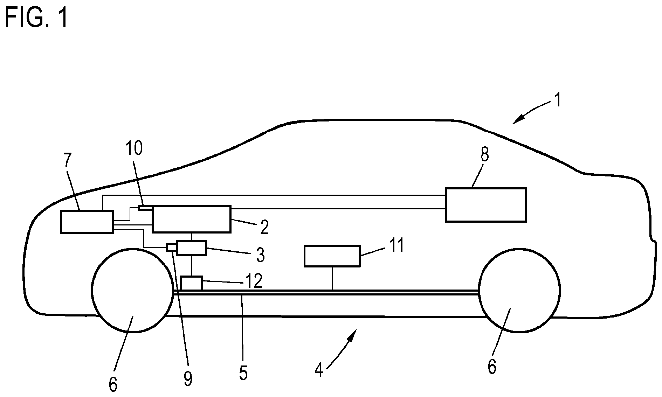

Fig. 1 zeigt schematisch ein Kraftfahrzeug 1. Das Kraftfahrzeug 1 umfasst eine elektrische Maschine 2, die über eine Kopplungseinrichtung 3 mit einer Komponente 5 eines Antriebsstrangs 4 des Kraftfahrzeugs 1 koppelbar ist. Im gezeigten Ausführungsbeispiel ist die Komponente 5 des Antriebsstrangs 4 eine als Kardanwelle ausgebildete Antriebswelle. Der Antriebsstrang 4 umfasst ferner die Räder 6 des Kraftfahrzeugs 1. Die Räder 6 sind durch ein Differentialgetriebe (nicht dargestellt) mit der Komponente 5 des Antriebsstrangs 4 verbunden. Weitere Komponenten des Antriebsstrangs 4 sind aus Übersichtlichkeitsgründen nicht dargestellt. Das Kraftfahrzeug 1 umfasst zudem einen elektrischen Energiespeicher 8, in dem Energie, insbesondere zum Antrieb des Kraftfahrzeugs 1, gespeichert ist.

Die Kopplungseinrichtung 3 ist in einem ersten Kopplungszustand und einem zweiten Kopplungszustand betreibbar. Im ersten Kopplungszustand ist die elektrische Maschine 2 über die Kopplungseinrichtung 3 mit der Komponente 5 des Antriebsstrangs 4 gekoppelt. In diesem Fall kann die elektrische Maschine 2 als Elektromotor zum Antrieb des Kraftfahrzeugs 1 verwendet werden, das heißt, sie wandelt in dem elektrischen Energiespeicher 8 gespeicherte elektrische Energie in kinetische Energie des Kraftfahrzeugs 1 um. Die elektrische Maschine 2 dient in diesem Fall als Antriebsmotor für das Kraftfahrzeug 1. Die Kopplung zwischen der elektrischen Maschine 2 und der Komponente 5 des Antriebsstrangs 4 erfolgt hierbei über ein Getriebe 12, das dazu ausgebildet ist, die Drehzahl der elektrischen Maschine 2 auf die Drehzahl der Komponente 5 des Antriebsstrangs 4 zu übersetzen, wobei die elektrische Maschine 2 schneller dreht als die Komponente 5. Im zweiten Kopplungszustand ist die elektrische Maschine 2 durch die Kopplungseinrichtung 3 von der Komponente 5 des Antriebsstrangs 4 entkoppelt.

Für das Kraftfahrzeug 1 ist vorgesehen, dass eine gegebenenfalls in einem Rotor der elektrischen Maschine 2 gespeicherte Rotationsenergie im zweiten Kopplungszustand, also bei Entkopplung der elektrischen Maschine 2 vom Antriebsstrang 4, durch einen Betrieb der elektrischen Maschine 2 als Generator rekuperiert beziehungsweise für verschiedene Zwecke zurückgewonnen werden kann. Details dazu werden im Folgenden erläutert.

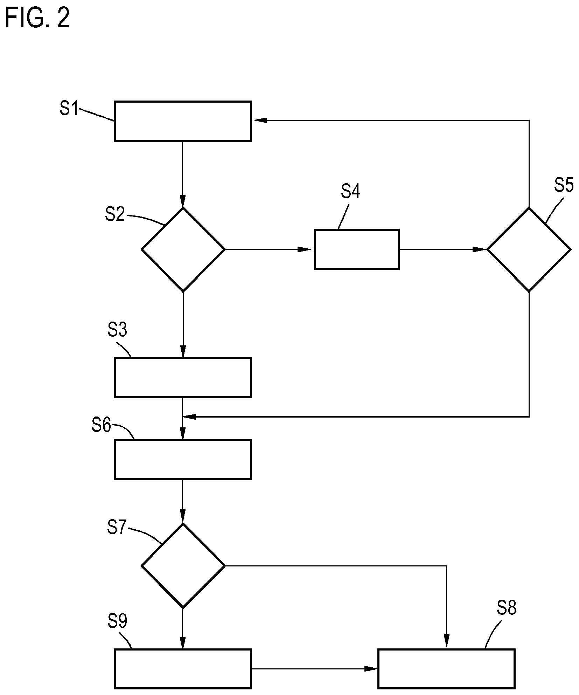

In Fig. 2 ist ein Flussdiagramm eines Verfahrens zum Betrieb des Kraftfahrzeugs 1 dargestellt. In Schritt S1 wird eine den Betriebszustand des Kraftfahrzeugs 1 betreffende Fahrzeuginformation erfasst. Diese kann beispielsweise angeben, ob eine Vollbremsung durchgeführt wird oder ob der Antrieb des Kraftfahrzeugs 1 durch einen Verbrennungsmotor 11, der zu diesem Zweck mit dem Antriebsstrang 4 gekoppelt wird, erfolgen soll.

In Schritt S2 wertet die Steuerungseinrichtung 7 eine von der Fahrzeuginformation abhängende Kopplungsbedingung aus. Ist die Kopplungsbedingung erfüllt, dann steuert eine Steuerungseinrichtung 7 im Schritt S3 einen elektromechanischen Aktor 9 an, der die Kopplungseinrichtung 3 in den zweiten Kopplungszustand bringt. Zudem speichert die Steuerungseinrichtung 7 den aktuellen Kopplungszustand der Kopplungseinrichtung 3.

Ist hingegen die Kopplungsbedingung nicht erfüllt, dann erfasst in Schritt S4 die Steuerungseinrichtung 7 den Kopplungszustand der Kopplungseinrichtung 3 durch einen Sensor (nicht dargestellt). Alternativ kann die Erfassung dadurch erfolgen, dass die Steuerungseinrichtung 3 den aktuelle Kopplungszustand bereits zuvor abgespeichert hat. In Schritt S5 überprüft anschließend die Steuerungseinrichtung 7, ob sich die Kopplungseinrichtung 3 im ersten oder im zweiten Kopplungszustand befindet.

Befindet sich die Kopplungseinrichtung 3 im ersten Kopplungszustand, so wird das Verfahren ab Schritt S1 wiederholt, um die Fahrzeuginformation und den Kopplungszustand im weiteren Fahrbetrieb zu überwachen.

Befindet sich die Kopplungseinrichtung 3 im zweiten Kopplungszustand, sei es, weil sie in Schritt S3 in den zweiten Kopplungszustand versetzt wurde oder weil dieser Kopplungszustand in Schritt S5 erkannt wurde, dann wird in Schritt S6 eine Betriebsinformation erfasst, wobei die Betriebsinformation unter anderem die Drehzahl eines Rotors der elektrischen Maschine 2 betrifft, die von einem Sensor 10 erfasst und an die Steuerungseinrichtung 7 übermittelt wird.

In Schritt S7 wertet die Steuerungseinrichtung 7 eine von der Betriebsinformation und dem Kopplungszustand der Kopplungseinrichtung 3 abhängende Rekuperationsbedingung aus. Die Rekuperationsbedingung ist nur dann erfüllbar, wenn sich die Kopplungseinrichtung 3 im zweiten Kopplungszustand befindet. Im gezeigten Ausführungsbeispiel ist die Erfüllung dieser Teilbedingung durch die Überprüfung des Kopplungszustandes in Schritt S5 bzw. durch die aktive Anwahl des zweiten Kopplungszustandes in Schritt S3 in Schritt S7 bereits sichergestellt, so dass auf eine erneute Prüfung des Kopplungszustandes prinzipiell verzichtet werden kann. Wie später noch erläutert werden wird, ist es aber möglich, dass die Steuereinrichtung im Hintergrund z. B. die Fahrzeuginformation weiter überwacht und in Abhängigkeit hiervon den Kopplungszustand unabhängig von den gezeigten Verfahrensschritten ändern kann. Daher kann es vorteilhaft sein, in Schritt S7 explizit erneut zu prüfen, ob die Kopplungseinrichtung im zweiten Kopplungszustand ist.

Zudem ist die Rekuperationsbedingung im Schritt S7 nur dann erfüllt, wenn die Drehzahl der elektrischen Maschine 2 größer als ein vorher festgelegter Drehzahlgrenzwert ist. Der Drehzahlgrenzwert kann beispielsweise eine Umdrehung pro Minute betragen. Eine Rekuperation ist nicht zweckmäßig, wenn die in dem Rotor der elektrischen Maschine 2 gespeicherte Rotationsenergie zu gering ist.

Außerdem sind weitere Betriebsinformationen auswertbar, von denen die Erfüllung der Rekuperationsbedingung im Schritt S7 abhängen kann. Die weiteren Informationen können beispielsweise die Geschwindigkeit des Kraftfahrzeugs 1 und/oder den Ladezustand eines elektrischen Energiespeichers 8 betreffen. Insbesondere wäre eine Rekuperation nicht zweckmäßig, wenn der elektrische Energiespeicher voll aufgeladen ist.

Ist die Rekuperationsbedingung nicht erfüllt, so wird das Verfahren im Schritt S8 beendet und kann z. B. unmittelbar oder nach Ablauf einer bestimmten Wartezeit ab Schritt S1 widerholt werden. Ist die Rekuperationsbedingung erfüllt, dann wird im Schritt S9 die elektrische Maschine 2 als Generator betrieben. Dabei wird die in dem Rotor der elektrischen Maschine 2 gespeicherte Energie rückgewonnen und geht vorteilhafterweise nicht durch Reibung verloren. Die auf diese Art rekuperierte Energie wird genutzt, um den elektrischen Energiespeicher 8 des Kraftfahrzeugs 1 aufzuladen. Zudem ist denkbar, dass die rekuperierte Energie für weitere Verbraucher des Kraftfahrzeugs 1, wie beispielsweise für eine Klimaanalage oder dergleichen, genutzt wird.

Während des gesamten Verfahrensablaufs wird der Fahrbetrieb des Kraftfahrzeugs 1 im Hintergrund durch die Steuerungseinrichtung 7 überwacht. Bei dieser Überwachung wird eine Rückkopplungsbedingung ausgewertet, wobei bei Erfüllung der Rückkopplungsbedingung die Kopplungseinrichtung 3 vom zweiten Kopplungszustand in den ersten Kopplungszustand gebracht wird. Dies erfolgt beispielsweise dann, wenn sich die Kopplungseinrichtung 3 im zweiten Kopplungszustand befindet und die elektrische Maschine 2 zum Antrieb des Kraftfahrzeugs 1 genutzt werden soll.

Der Vollständigkeit halber sei erwähnt, dass bei dem Verfahren der Betrieb der elektrischen Maschine 2 als Generator nicht nur dann erfolgen kann, wenn sich die Kopplungseinrichtung 3 im zweiten Kopplungszustand befindet, sondern gleichwohl auch dann, wenn sie sich im ersten Kopplungszustand befindet. In diesem Fall wird kinetische Energie des Kraftfahrzeugs 1 durch den Betrieb der elektrischen Maschine als Generator in elektrische Energie umgewandelt, was insbesondere beim Bremsen des Kraftfahrzeugs 1 zweckmäßig ist. Die dadurch erzeugte beziehungsweise rückgewonnene elektrische Energie wird z. B. dem elektrischen Energiespeicher 8 zugeführt, wodurch dieser aufgeladen wird. Die Betriebsdauer des Energiespeichers 8 wird dadurch verlängert und mithin der Wirkungsgrad des Kraftfahrzeugs 1 verbessert.

## Patentansprüche

1. Verfahren zum Betrieb eines Kraftfahrzeugs (1), umfassend eine elektrische Maschine (2) und eine Kopplungseinrichtung (3), die in einem ersten Kopplungszustand die elektrische Maschine (2) mit einem Antriebsstrang (4) koppelt und in einem zweiten Kopplungszustand die elektrische Maschine (2) von dem Antriebsstrang (4) entkoppelt, wobei das Verfahren die folgenden Schritte umfasst:
a) Erfassen einer Kopplungsinformation, die angibt, ob die Kopplungseinrichtung (3) in dem ersten oder zweiten Kopplungszustand ist,
b) Auswerten einer Rekuperationsbedingung, deren Erfüllung von der Kopplungsinformation abhängt, wobei die Rekuperationsbedingung erfüllt oder nur dann erfüllbar ist, wenn die Kopplungseinrichtung (3) in dem zweiten Kopplungszustand ist, und
c) Abbremsen der elektrischen Maschine (2) durch Betreiben der elektrischen Maschine (2) als Generator, wenn die Rekuperationsbedingung erfüllt ist,
wobei wenigstens eine den Betriebszustand des Kraftfahrzeugs (1) betreffende Betriebsinformation erfasst wird, wobei die Erfüllung der Rekuperationsbedingung zusätzlich von der Betriebsinformation abhängt, rch gekennzeichnet, dass die Betriebsinformation die Geschwindigkeit des Kraftfahrzeugs (1) und/oder ein prognostiziertes Starten eines Verbrennungsmotors (11) des Kraftfahrzeugs (1) betrifft.

2. Verfahren nach Anspruch 1,
**dadurch gekennzeichnet,**
**dass** die Betriebsinformation die Drehzahl der elektrischen Maschine (2) beschreibt und die Rekuperationsbedingung nur dann erfüllbar ist, wenn diese größer als ein vorgegebener Drehzahlgrenzwert ist.

3. Verfahren Anspruch 1 oder 2,
**dadurch gekennzeichnet,**
**dass** wenigstens eine den Betriebszustand des Kraftfahrzeugs (1) betreffende Fahrzeuginformation erfasst wird, wobei bei Erfüllung einer von der Fahrzeuginformation abhängigen Kopplungsbedingung die Kopplungseinrichtung (3) in den zweiten Kopplungszustand wechselt, wenn die Kopplungseinrichtung (3) im ersten Kopplungszustand ist.

4. Verfahren nach einem der vorangehenden Ansprüche,
**dadurch gekennzeichnet,**
**dass** das Kraftfahrzeug (1) durch die elektrische Maschine (2) angetrieben wird, wenn sich die Kopplungseinrichtung (3) im ersten Kopplungszustand befindet und eine Antriebsbedingung erfüllt ist.

5. Verfahren nach einem der vorangehenden Ansprüche,
**dadurch gekennzeichnet,**
**dass** die elektrische Maschine (2), wenn sie bei Erfüllung der Rekuperationsbedingung als Generator genutzt wird, wenigstens einen elektrischen Energiespeicher (8) auflädt.

6. Verfahren nach einem der vorangehenden Ansprüche,
**dadurch gekennzeichnet,**
**dass** im ersten Kopplungszustand die elektrische Maschine (2) über ein Getriebe (12) mit einer Komponente (5) des Antriebsstrangs (4) gekoppelt ist, wobei das Getriebe (12) die Drehzahl der elektrischen Maschine (2) auf die Drehzahl dieser Komponente (5) des Antriebsstrangs (4) übersetzt, wobei die Drehzahl der elektrischen Maschine (2) hierbei größer ist als die Drehzahl dieser Komponente (5) des Antriebsstrangs (4).

7. Kraftfahrzeug umfassend eine elektrische Maschine (2), eine Kopplungseinrichtung (3), die in einem ersten Kopplungszustand die elektrische Maschine (2) mit einem Antriebsstrang (4) koppelt und in einem zweiten Kopplungszustand die elektrische Maschine (2) von dem Antriebsstrang (4) entkoppelt, und eine Steuerungseinrichtung (7), wobei die Steuerungseinrichtung (7) dazu eingerichtet ist, den Betrieb der elektrischen Maschine (2) gemäß dem Verfahren nach einem der vorangehenden Ansprüche zu steuern.

8. Kraftfahrzeug nach Anspruch 7,
**dadurch gekennzeichnet,**
**dass** ein Getriebe (12) die elektrische Maschine (2) in dem ersten Kopplungszustand mit einer Komponente (5) des Antriebsstrangs (4) koppelt, wobei das Getriebe (12) die Drehzahl der elektrischen Maschine (2) auf die Drehzahl dieser Komponente (5) des Antriebsstrangs (4) übersetzt, wobei die Drehzahl der elektrischen Maschine (2) größer ist als die Drehzahl der Komponente (5) des Antriebsstrangs (4).

## Claims

1. Method for operating a motor vehicle (1), comprising an electric machine (2) and a coupling apparatus (3), which, in a first coupling state, couples the electric machine (2) to a drivetrain (4) and, in a second coupling state, decouples the electric machine (2) from the drivetrain (4), wherein the method comprises the following steps:
a) registering an item of coupling information, which specifies whether the coupling apparatus (3) is in the first or second coupling state,
b) analyzing a recuperation condition, the fulfillment of which depends on the coupling information, wherein the recuperation condition is fulfilled or can only be fulfilled if the coupling apparatus (3) is in the second coupling state, and
c) braking the electric machine (2) by operating the electric machine (2) as a generator if the recuperation condition is fulfilled,
wherein at least one item of operating information relating to the operating state of the motor vehicle (1) is registered, wherein the fulfillment of the recuperation condition is additionally dependent on the operating information, **characterized in that** the operating information relates to the speed of the motor vehicle (1) and/or a predicted starting of an internal combustion engine (11) of the motor vehicle (1).

2. Method according to claim 1,
**characterized in that**
the operating information describes the speed of the electric machine (2) and the recuperation condition can only be fulfilled if it is greater than a predetermined speed limit value.

3. Method according to claim 1 or 2,
**characterized in that**
at least one item of vehicle information relating to the operating state of the motor vehicle (1) is registered, wherein, if a coupling condition dependent on the vehicle information is fulfilled, the coupling apparatus (3) changes into the second coupling state if the coupling apparatus (3) is in the first coupling state.

4. Method according to any one of the preceding claims,
**characterized in that**
the motor vehicle (1) is driven by the electric machine (2) if the coupling apparatus (3) is in the first coupling state and a drive condition is fulfilled.

5. Method according to any one of the preceding claims,
**characterized in that**
the electric machine (2), if it is used as a generator upon fulfillment of the recuperation condition, charges at least one electrical energy store (8).

6. Method according to any one of the preceding claims,
**characterized in that**
in the first coupling state, the electric machine (2) is coupled via a transmission (12) to a component (5) of the drivetrain (4), wherein the transmission (12) converts the speed of the electric machine (2) to the speed of this component (5) of the drivetrain (4), wherein the speed of the electric machine (2) is greater in this case than the speed of this component (5) of the drivetrain (4).

7. Motor vehicle comprising an electric machine (2), a coupling apparatus (3), which, in a first coupling state, couples the electric machine (2) to a drivetrain (4) and, in a second coupling state, decouples the electric machine (2) from the drivetrain (4), and a control apparatus (7), wherein the control apparatus (7) is configured to control the operation of the electric machine (2) in accordance with the method according to any one of the preceding claims.

8. Motor vehicle according to claim 7,
**characterized in that**
a transmission (12) couples the electric machine (2) in the first coupling state to a component (5) of the drivetrain (4), wherein the transmission (12) converts the speed of the electric machine (2) to the speed of this component (5) of the drivetrain (4), wherein the speed of the electric machine (2) is greater than the speed of the component (5) of the drivetrain (4).

## Revendications

1. Procédé de fonctionnement d'un véhicule automobile (1) comprenant une machine électrique (2) et un appareil de couplage (3) qui, dans un premier état de couplage, couple la machine électrique (2) à une chaîne cinématique (4) et, dans un second état de couplage, découple la machine électrique (2) de la chaîne cinématique (4), le procédé comprenant les étapes suivantes :
a) acquisition d'une information de couplage qui indique si l'appareil de couplage (3) est dans le premier ou le second état de couplage,
b) évaluation d'une condition de récupération dont la réalisation dépend de l'information de couplage, dans lequel la condition de récupération est remplie ou peut être remplie uniquement lorsque l'appareil de couplage (3) est dans le second état de couplage, et
c) freinage de la machine électrique (2) en faisant fonctionner la machine électrique (2) en tant que générateur lorsque la condition de récupération est remplie,
dans lequel au moins une information de fonctionnement concernant l'état de fonctionnement du véhicule automobile (1) est enregistrée, dans lequel le remplissage de la condition de récupération dépend en outre de l'information de fonctionnement, **caractérisé en ce que** l'information de fonctionnement concerne la vitesse du véhicule automobile (1) et/ou un démarrage prédit d'un moteur à combustion (11) du véhicule automobile (1).

2. Procédé selon la revendication 1,
**caractérisé en ce que**
l'information de fonctionnement décrit la vitesse de rotation de la machine électrique (2) et la condition de récupération ne peut être remplie que si celle-ci est supérieure à une valeur limite de vitesse de rotation prédéfinie.

3. Procédé selon la revendication 1 ou 2,
**caractérisé en ce que**
au moins une information de véhicule concernant l'état de fonctionnement du véhicule automobile (1) est enregistrée, dans lequel l'appareil de couplage (3) bascule dans le second état de couplage lorsque la condition de couplage dépendant de l'information relative au véhicule est remplie, si l'appareil de couplage (3) est dans le premier état de couplage.

4. Procédé selon l'une quelconque des revendications précédentes,
**caractérisé en ce que**
le véhicule automobile (1) est entraîné par la machine électrique (2) lorsque l'appareil de couplage (3) se trouve dans le premier état de couplage et une condition d'entraînement est remplie.

5. Procédé selon l'une quelconque des revendications précédentes,
**caractérisé en ce que**
la machine électrique (2), lorsqu'elle est utilisée en tant que générateur lorsque la condition de récupération est remplie, charge au moins un accumulateur d'énergie électrique (8).

6. Procédé selon l'une quelconque des revendications précédentes,
**caractérisé en ce que**
dans le premier état de couplage, la machine électrique (2) est couplée à un composant (5) de la chaîne cinématique (4) par l'intermédiaire d'une transmission (12), dans lequel la transmission (12) convertit la vitesse de rotation de la machine électrique (2) en la vitesse de rotation de ce composant (5) de la chaîne cinématique (4), dans lequel la vitesse de rotation de la machine électrique (2) est à cet effet supérieure à la vitesse de rotation de ce composant (5) de la chaîne cinématique (4).

7. Véhicule automobile comprenant une machine électrique (2), un appareil de couplage (3) qui, dans un premier état de couplage, couple la machine électrique (2) à une chaîne cinématique (4) et, dans un second état de couplage, découple la machine électrique (2) de la chaîne cinématique (4), et un appareil de commande (7), dans lequel l'appareil de commande (7) est configuré pour commander le fonctionnement de la machine électrique (2) selon le procédé selon l'une quelconque des revendications précédentes.

8. Véhicule automobile selon la revendication 7,
**caractérisé en ce que**
une transmission (12) couple la machine électrique (2) dans le premier état de couplage à un composant (5) de la chaîne cinématique (4), dans lequel la transmission (12) convertit la vitesse de rotation de la machine électrique (2) en la vitesse de rotation de ce composant (5) de la chaîne cinématique (4), dans lequel la vitesse de rotation de la machine électrique (2) est supérieure à la vitesse de rotation du composant (5) de la chaîne cinématique (4).
